# EUROPÄISCHE PATENTSCHRIFT

(11) **EP 2 469 233 B1**
(45) Veröffentlichungstag und Bekanntmachung des Hinweises auf die Patenterteilung: **18.05.2016**
(21) Anmeldenummer: 10197018.4
(22) Anmeldetag: 27.12.2010
(51) Int. Cl.: G06Q 10/04, G09B 29/00

(54) **System zur Wegeerfassung**
Route detecting system
Système de détection de routes

(43) Veröffentlichungstag der Anmeldung: 27.06.2012
(73) Patentinhaber: Deutsche Post AG, 53113 Bonn (DE)
(72) Erfinder: Paul, Boris, 53115 Bonn (DE); Wild, Verena, 53129 Bonn (DE); Ulrich, Keith, 53227 Bonn-Oberkassel (DE)
(74) Vertreter: Jostarndt, Hans-Dieter

(56) Entgegenhaltungen:
- EP-A1- 1 939 589
- DE-A1- 10 161 969
- DE-T2- 60 020 008
- US-A- 5 214 757
- US-A1- 2007 129 082

## Beschreibung

### Gebiet der Erfindung

Die Erfindung betrifft ein System zur Wegeerfassung und ein Verfahren zum Betreiben eines solchen Systems.

### Hintergrund der Erfindung

Kurierdienste sind zum Liefern oder Abhoien von Waren auf ein zuverlässiges Kartenmaterial angewiesen, um diese Liefer- oder Abholfahrten mit möglichst wenig Zeitaufwand oder Materialaufwand durchführen zu können. Abhol- und Lieferfahrten betreffen alle Arten von Fahrten, wo entweder ein Lieferobjekt einem Empfänger zu seinem Lieferort geliefert wird oder ein Lieferobjekt von einem Absender an seinem Abholort abgeholt wird. Gerade in Gebieten mit nicht aktuellen oder nicht vorhandenen Wegeverzeichnissen kann die Auslieferung oder Abholung eines Objektes von einem bestimmten Wohnort des Empfängers/Absenders problematisch oder gar unmöglich sein. In manchen Gebieten der Erde sind manchmal gar keine üblichen Wegeverzeichnisse verfügbar, sondern der Kurierdienst hat eventuell nur recht vage Wegbeschreibung zum Erreichen des Wohnortes des Empfängers/Absenders zur Verfügung. Diese Beschreibung kann eventuell mehrdeutig sein und führt erst zusammen mit Auskünften der Bevölkerung vor Ort zum Erreichen des Wohnortes über dem Lieferdienst möglicherweise nicht bekannte Wege. Es wäre daher von großer Hilfe, ein System zur Verfügung zu haben, mit dem für solche schwer auffindbaren Orte ein Kartenmaterial oder Wegeverzeichnis erstellt und ständig aktualisiert werden kann, so dass einerseits Anfahrwege für einen Kunden wiedergefunden werden könnten oder die Information über vorhandene Wege zu einem schnelleren Erreichen eines neuen Adressenortes an oder entlang dieser Wege ermöglicht wird.

DE 600 20 008 T2 offenbart ein System zur Sammlung von Daten für eine geographische Datenbank. Das Datenbanksammelsystem weist dabei die Fähigkeit auf, Sprachbefehle eines zusätzlich mitfahrenden Rechercheurs zu erkennen, um das Sammeln und Kennzeichnen von Daten zu erleichtern bzw. zu ermöglichen, während durch einen geographischen Datenbereich gefahren wird. Das Datensammelsystem enthält ein Positionsbestimmungssystem, das kontinuierlich die Position des Datensammelsystems bestimmt, wenn das Datensammelsystem längs der Straßen in einem geographischen Gebiet transportiert wird. Mittels Spracherkennung können Texte zur späteren Erläuterung in der Karte eingegeben werden. Bei Empfang einer Bestätigung vom Ortsrechercheur speichert das Datensammelsystem einen Text zusammen mit der zeitlich letzten vom Positionsbestimmungssystem erhaltenen Position ab. Die vom Datensammelsystem erhaltenen Daten können in der geographischen Datenbank ergänzt oder modifiziert werden.

EP 1 939 589 A1 offenbart ein Karteninformationserzeugungssystem, mit dem neue Straßen als neue Karteninformation zu einer bereits vorhandenen Karte in einem Navigationsgerät hinzugefügt werden. Es enthält dazu einen Jnformationssammelbereich zum Sammeln von Fahrortinformation, die einen Fahrort eines Fahrzeugs betreffen, das entlang eines Wegs fährt, der nicht in einem Straßennetzwerk von Karteninformation enthalten ist, und einen Neustraßeninformationserzeugungsbereich zum Erzeugen neuer Straßeninformationen, die den Weg betreffen, der nicht in dem Straßennetzwerk enthalten ist, basierend auf den Fahrortinformationen, die von dem Informationssammelbereich gesammelt werden. Dabei werden die Daten in einem Informationsgruppierungsbereich aus einer Mehrzahl von Fahrortinformationen, die einen identischen Weg betreffen, zu einer gemeinsamen Fahrortinformation für diesen Weg zusammengefasst, woraus der Neustraßeninformationserzeugungsbereich eine neue Straßeninformation erzeugt, die einen einzelnen neuen Weg betrifft. Um zwischen Daten, die für einen gemeinsamen Weg zusammengefasst werden sollen, und Daten, die unterschiedliche aber nahe beisammen liegenden Wege betreffen, unterscheiden zu können, wird in einem Distanzberechnungsbereich eine durchschnittliche Trennungsdistanz als ein Durchschnittswert einer Trennungsdistanz zwischen Positionskoordinaten bei vorbestimmten Distanzintervallen entlang linearer Näherungen der Fahrorte der mehreren Fahrortinformationen bestimmt und die Daten, die innerhalb einer vorbestimmten Distanz liegen, zu einem gemeinsamen Weg zusammengefasst.
US 2007/0129082 A1 offenbart einen automatischen Kartenersteller, der für die Erstellung von Karten in einem bisher nicht kartographierten Gebiet, zur Ergänzung unvollständiger Karten oder zur Berichtigung von vorliegenden Karten verwendet werden kann. Dazu sind mobile Geräte mit einer Ortsbestimmungstechnologie ausgerüstet, die entlang der Straßen fahren und ihre Position zu der entsprechenden Kartenerstellungsapplikation übermitteln. Wenn die Position des mobilen Gerätes innerhalb einer aktiven Kartenregion ist, kann das Kartenerstellungsgerät das mobile Gerät anweisen, seine Position häufiger zur Aufzeichnung der Route des mobilen Geräts zu übermitteln. Wenn die Route so festgestellt ist, wird aufgrund der gewonnenen Daten eine neue Karte mit dieser Route erstellt. Damit ist die verfügbare Karteninformation für spätere Verwendungen aufgefrischt.
DE 101 61 969 A1 offenbart ein System und ein Verfahren zur Aufnahme und Wiedergabe eines optimierten Einsatzplanes für Servicefahrzeuge, wie beispielsweise Müllfahrzeuge, Lieferfahrzeuge etc. Hierbei umfasst das Servicefahrzeug ein Navigationssystem, eine Datenverarbeitungsanlage und eine Dateneingabevorrichtung sowie eine Datenausgabevorrichtung, die jeweils über Schnittstellen Daten miteinander austauschen können.
US 5 214 757 A offenbart ein automatisches transportables System zur Kartographierung mit Hilfe von GPS-Informationen in einer Datenbank für geographische Informationen mit einer Datenübertragung in Realzeit. Hierbei können Positionsinformationen in Realzeit mittels GPS aufgenommen werden, was Nutzern ermöglicht, den Weg, den sie augenblicklich beschreiten, nachzuvollziehen.

### Zusammenfassung der Erfindung

Es ist daher eine Aufgabe der Erfindung ein System bereitzustellen, mit dem ein Kartenmaterial oder Wegeverzeichnis erstellt oder aktualisiert werden kann, um ein schnelleres Erreichen eines Ortes an oder entlang dieser Wege anhand des erstellten oder aktualisierten Kartenmaterials zu ermöglichen.

Diese Aufgabe wird gelöst durch ein System zur Erstellung von Kartenmaterial oder eines Wegeverzeichnisses umfassend mindestens ein Positionsbestimmungsgerät, ein Computersystem und ein Navigationssystem, das dazu vorgesehen ist, während einer Bewegung des Positionsbestimmungsgeräts für mehrere Positionen entlang eines oder mehrerer Wege zumindest die Geokoordinaten der jeweiligen Position und deren jeweilige Messzeiten zu bestimmen und als eine chronologische Folge der Geokoordinaten gemäß der dazugehörigen Messzeiten an ein Computersystem mit Datenspeicher zur Speicherung zu übertragen, wobei das Computersystem dazu ausgestaltet ist, die von mindestens einem der Positionsbestimmungsgeräte bestimmte chronologische Folge der Geokoordinaten in eine elektronische Karte der Version n einzutragen und in der Karte die Geokoordinaten entlang ihrer chronologischen Folge zu einer Wegstrecke zu verbinden und die elektronische Karte zusammen mit der Wegstrecke entlang der Folge der Geokoordinaten als elektronische Karte der Version n+1 zu speichern, wobei das Positionsbestimmungsgerät ein Triggermittel umfasst, dessen Betätigung die Messung der Geokoordinaten an den Punkten der Betätigung auslöst, wobei die Geokoordinaten in der Folge der Geokoordinaten, die durch das Betätigen des Triggermittels gemessen wurden, besonders gekennzeichnet sind und dass das Positionsbestimmungsgerät ein Übertragungsmittel umfasst, das die Folge der Geokoordinaten inklusive der durch Betätigung des Triggermittels erhaltenen Geokoordinaten unverzüglich nach der Messung über ein Mobilfunknetz an das Computersystem überträgt, wobei dass das Computersystem dazu ausgestaltet ist, nach der Speicherung die neueste Version der elektronischen Karte an das Navigationssystem zu übermitteln, und wobei das Navigationssystem dazu ausgestaltet ist, die übermittelte elektronische Karte einer Routenberechnung zu Grunde zu legen und/oder in einem Anzeigeelement des Navigationssystems anzuzeigen.

Wege bezeichnen hier jede Art von Straßen, Routen, Pfaden, oder anderen Wegen, die gewöhnlich von Personen oder Fahrzeugen benutzt werden, um von einer Startposition zu einer Zielposition zu gelangen und sich somit zur effektiven Fortbewegung im Gegensatz zu einer Querfeldeinroute anbieten, um eine Wegstecke möglichst schnell zurückzulegen. Die Wege können beispielsweise für motorisierte Fahrzeuge wie beispielsweise Autos, Lastkraftwagen oder Motorräder, für von Personenkraft betriebene Fahrzeuge wie beispielsweise Fahrräder oder Karren oder für Fußgänger vorgesehen sein. Die Erfassung von Wegen, die bisher entweder unvollständig oder gar nicht auf Karten erfasst sind, erleichtert dem Nutzer solcher mit den neu erfassten Wegen erweiterten Karten das schnelle Erreichen eines Zielortes, da der Nutzer zum einen eine größere Auswahl an Wegen zur Verfügung gestellt bekommt und zum anderen eventuell überhaupt erst Informationen erhält, wie er einen Zielort erreichen kann.

Zur Erfassung von neuen Wegen wird das Positionsbestimmungsgerät entlang eines von einem Nutzer des Systems beschrittenen Weges mitgeführt. Das erfindungsgemäße System kann mit einem einzelnen oder mit mehreren Positionsbestimmungsgeräten betrieben werden. Je nach verwendetem Fahrzeug kann das Positionsbestimmungsgerät in oder an dem Fahrzeug befestigt sein oder der Nutzer kann das Positionsbestimmungsgerät am Körper mit sich führen. In einer Ausführungsform ist das Positionsbestimmungsgerät ein portables Gerät, damit beispielsweise ein mit einem Fahrzeug nicht befahrbarer Weg zu Fuß mittels des von einer Person (Nutzer) mitgeführten portablen Positionsbestimmungsgeräts auch bestimmt werden kann. Gegebenenfalls ist ein Zielort nur über einen Fußweg erreichbar oder es kann mit dem Fussweg eine wesentliche Verkürzung der Wegstrecke zum Zielort erreicht werden, In einer Ausführungsform ist das Positionsbestimmungsgerät daher für den Betrieb mittels Batterien ausgestattet. Diese Geräte können unabhängig von einer Stromversorgung durch ein beliebiges Gelände bewegt werden, um dort die Geokoordinaten bestimmen zu können.

Das Positionsbestimmungsgerät bezeichnet hier jede Art von Gerät, das geeignet ist, die Geokoordinaten an einem bestimmten Ort zu bestimmen, Mit den Geokoordinaten (geographische Breite und geographische Länge) lässt sich die Lage jedes Punktes auf der Erde beschreiben. Die Erde wird dabei in 360 Längengrade und 180 Breitengrade aufgeteilt. Diese Geokoordinaten können mit Hilfe eines globale Navigationssatellitensystems (GNSS) weltweit mit entsprechenden Empfangsgeräten auf der Erde und in der Luft durch den Empfang der Signale von Navigationssatelliten bestimmt werden. Beispiele für bereits betriebene oder in Zukunft verfügbare Satellitennavigationssysteme sind das Galileo-System der Europäischen Union, das amerikanische Globale Positionsbestimmungssystems GPS, das russische GLONASS oder das chinesische Compass-G2. Das Positionsbestimmungsgerät gemäß der vorliegenden Erfindung ist in der Lage, zumindest die Signale eines der voranstehenden Satellitennavigationssysteme zu empfangen und daraus Geokoordinaten zu bestimmen. In einer Ausführungsform umfasst das Positionsbestimmungsgerät einen GPS-Mikrocontrollerchip. GPS-Mikrokontrollerchips interpretieren Signale von GPS-Satelliten und bestimmen die Position des GPS-Empfängers, also des Positionsbestimmungsgeräts und damit dessen Geo-Position.

Damit aus den Geokoordinaten später eine Wegstrecke definiert und in eine Karte eingetragen werden kann, müssen die Geokoordinaten in der zeitlich richtigen Reihenfolge angeordnet (sortiert, aufbewahrt) werden, d. h. die Messzeit für die Geokoordinaten (üblicherweise die Zeit, an der das Satellitensignal empfangen wurde, aus dem die Geokoordinaten bestimmt wurden) bestimmt die Reihenfolge der Geokoordinaten in der chronologische Folge der Geokoordinaten. Das Positionsbestimmungsgerät umfasst daher vorzugsweise einen handelsüblichen Prozessor und ein Speichermedium (z. B. einen Festkörperspeicher) zur chronologischen Ordnung der Geokoordinaten zur Erstellung der Folge der Geokoordinaten und zur Speicherung der Folge bis zur Übertragung der Folge an das Computersystem. Der Fachmann ist in der Lage, die richtigen Hardwarekomponenten dafür auszusuchen und ein entsprechendes Programm zur Erstellung und Abspeicherung der chronologischen Folge der entlang des Weges bestimmten Geokoordinaten in einem geeigneten Datenformat im Rahmen der vorliegenden Erfindung bereitzustellen.

Der Ausdruck "zum Computersystem übertragen" kann dabei eine sofortige Übertragung beispielsweise mittels einer Mobilfunkverbindung zu dem Computersystem oder eine spätere Übertragung über eine zwischen dem Positionsbestimmungsgerät und dem Computersystem hergestellte Datenverbindung bezeichnen. Zumindest im letzteren Fall umfasst das Positionsbestimmungsgerät einen geeigneten Datenspeicher zumindest zum zwischenzeitlichen Speichern der Folge der Geokoordinaten

Das Computersystem kann jedes für die Anwendung in dem erfindungsgemäßen System geeignete Computersystem sein, beispielsweise ein serverbasiertes Computersystem. Der Datenspeicher kann beispielsweise eine Datenbank sein. In einer Ausführungsform ist das Computersystem mit Datenspeicher ein "Datenwarenhaus (Data Warehouse)", das die Geokoordinaten auch externen Diensten, beispielsweise Kartendienste zur Herstellung digitaler Karten, Rettungsdienst oder anderen staatlichen Organen wie die Polizei, für eine spätere Nutzung zur Verfügung stellt. Diese externen Dienste können beispielsweise über eine geeignete Schnittstelle auf das Data Warehouse zugreifen.

Der Begriff "elektronische Karte" bezeichnet eine Landkarte oder Straßenkarte, die in digitaler Form vorliegt. Weltweite digitale Land- oder Straßenkarten sind beispielsweise im Internet verfügbar. Der Nachteil dieser Karten ist ihr oftmals veralteter Status. Dennoch kann eine solche digitale Karte, vorzugsweise mit möglichst neuem Erstellungsdatum, als Ausgangspunkt für eine mit dem erfindungsgemäßen System zu ergänzende Karte dienen. Die Karten sind in der Regel mit Längen- und Breitengraden versehen, so dass das Computersystem die neu bestimmten Geokoordinaten in diese Karten direkt eintragen kann. Die Ausgangskarte ohne eingetragene Folgen an Geokoordinaten möge die Versionsnummer n=1 besitzen. Wird eine Folge an Geokoordinaten in die elektronische Karte eingetragen, so wird diese Karte mit zusätzlichen Wegeinformationen als Version n=2 abgespeichert. Die Version 2 stellt nun die neueste Version der elektronischen Karte dar. Zukünftige Eintragungen von Folgen an Geokoordinaten führt dann zu den Kartenversionen 3, 4, 5, ... usw. Entsprechend sind die Versionen 3, 4, 5, ... jeweils vor Eintragung der nächsten Folge der Geokoordinaten die neuesten Versionen der elektronischen Karte. Der Begriff "in die Karten eintragen" kann dabei eine Einfügung von Geokoordinatendaten in den Datensatz sein, aus dem die Karte erstellt wird oder kann eine Überlagerung des Datensatzes der digitalen Karte mit den Datensätzen der Folge der Geokoordinaten sein. Die Überlagerung wird dabei erst bei einer Darstellung der Karte mit den zusätzlichen Folgen an Geokoordinaten auf einem Bildschirm zur Anzeige der elektronischen Karte sichtbar. Der ergänzte Datensatz zur Karte oder die überlagerten Datensätze werden dann als neue Version der elektronischen Karte abgespeichert. In einer Ausführungsform umfasst das Computersystem geeignete Druckmittel zum Ausdrucken der elektronischen Karte, damit gegebenenfalls von den Nutzern des Systems auch Karten in Papierform zur Wegfindung und Wegbenutzung verwendet werden können. Damit eine Folge an Geokoordinaten auf der Karte einen sichtbaren Weg darstellt, wird die Folge der Geokoordinaten chronologisch von einer Geokoordinate zur zeitlich gesehen nächsten Geokoordinate mit einer Markierung, beispielsweise einer Wegelinie, zu einer Wegstrecke verbunden. Die Wegstrecke verläuft entlang der chronologische Folge der Geokoordinaten und stellt somit sichtbar den mit dem Positionsbestimmungsgerät verfolgten Weg dar. Der Fachmann ist im Rahmen der vorliegenden Erfindung in der Lage, ein entsprechendes Programm zur Verfügung zu stellen, das eine Darstellung der Folge der Geokoordinaten auf einem Bildschirm als Wegestrecke ermöglicht. Vorzugsweise werden die dargestellten Wegstrecken mit einer Zeitinformation versehen, die vorzugsweise zusammen mit der elektronischen Karte dargestellt wird. Anhand der Zeitinformation kann die Aktualität der Wegeinformation festgestellt werden. Als Wegeinformation wird die Bereitstellung der elektronischen Karte für einen Nutzer bezeichnet.

Ein solches System führt zu einer Optimierung des erneuten Erreichens von Orten (beispielsweise mit einem Kurierfahrzeug), da nach einer Wegeerfassung über die entlang eines bisher nicht verzeichneten Weges bestimmten Geokoordinaten der Weg nun auf dem Kartenmaterial (die elektronische Karte) vorhanden ist und ab diesem Zeitpunkt für die Erreichung eines Punktes auf diesem Wege oder für die Erreichung eines beliebigen Punktes unter Benutzung dieses Weges verwendet werden kann. Gerade in Regionen mit sich kontinuierlich verändernden Wegeverhältnissen, beispielsweise Großstadtregionen in Indien, verbessert dieses System deutlich die Effektivität beim Aufsuchen eines Zielortes. Durch das erfindungsgemäße System wird eine Person oder ein Kurierdienst in die Lage versetzt, für die Ansteuerung eines Zielortes ein aktuelles Wegenetz zu benutzen, wodurch beispielsweise eine schnellere, einfachere oder effektivere Abholung / Lieferung von Lieferobjekten im Falle eines Kurierdienstes als Nutzer des erfindungsgemäßen Systems möglich ist. Das in der vorliegenden Erfindung beanspruchte System ist mittels der Eingaben der Geokoordinaten ein lernendes System. Kurierdienste können hier alle Arten von Kurierdiensten, z.B. DHL oder andere Kurierdienste, sein. Kurierfahrzeuge mit einem solchen Positionsbestimmungsgerät können Fahrtzeuge aller Art sein, üblicherweise Transporter oder Trucks. In alternativen Ausführungsformen können die Kurierfahrzeuge auch Fahrräder sein. Gegebenenfalls erfolgt der Kurierdienst zu Fuß. Die Abhol- oder Lieferobjekte, die mit den Abhol- oder Lieferfahrten transportiert werden, können Objekte aller Art sein, beispielsweise Pakete, Briefe, Behälter oder andere Objekte.

Das Positionsbestimmungsgerät umfasst ein Übertragungsmittel zur Übertragung der Folge der Geokoordinaten an das Computersystem. In einer Ausführungsform ist das Übertragungsmittel eine Datenschnittstelle, wobei das System eine mit dem Computersystem verbundene Auslesestation zum Auslesen der Folge der Geokoordinaten aus dem Positionsbestimmungsgerät über die Datenschnittstelle umfasst. Diese Schnittstelle kann eine handelsübliche Computerschnittstelle geeignet zum Übertragen von Daten sein. Diese Auslesestation kann beispielsweise das Positionsbestimmungsgerät aufnehmen, wobei die Auslesestation eine Schnittstelle zumindest als Dateneingang besitzt, die mit der entsprechenden Schnittstelle des Positionsbestimmungsgeräts verbunden wird. Somit können Geokoordinaten aus dem Positionsbestimmungsgerät an das Computersystem zur Speicherung in einem Datenspeicher, beispielsweise einer Datenbank, übermittelt werden. In anderen Ausführungsformen erlauben die Schnittstellen eine Übertragung von Daten, beispielsweise der elektronischen Karte vom Computersystem an das Positionsbestimmungsgerät.

Das Übertragungsmittel, vorzugsweise ein Mobilfunkgerät, ist dazu geeignet, die Folge von Geokoordinaten über ein Mobilfunknetz an das Computersystem zu übertragen und das Computersystem ist geeignet, die Folge der Geokoordinaten über das Mobilfunknetz zu empfangen. Durch die drahtlose Verbindung können ohne Zeitverlust neue Folgen an Geokoordinaten in die elektronische Karte eingetragen werden. Der Zeitverlust bis zur Rückkehr des Positionsbestimmungsgeräts an eine Auslesestation kann vermieden werden. Hierbei können die Geokoordinaten unverzüglich nach der Messung an das Computersystem übertragen werden und die Folge an Geokoordinaten wächst im Computersystem chronologische an, bis keine Geokoordinaten mehr übertragen werden. Diese kontinuierliche Übertragung kann beispielsweise mittels eines Endsignals vom Positionsbestimmungsgerät abgeschlossen werden (beispielsweise durch Betätigung eines entsprechenden Knopfs oder Schalters), so dass das Computersystem die Information erhält, dass die Folge an Geokoordinaten vollständig ist und die Wegstrecke entsprechend eingetragen werden kann. Bei dieser Form der Übertragung können mehrere Positionsbestimmungsgeräte Geokoordinaten an das Computersystem übertragen. Deshalb besitzen die Geokoordinaten in einer Ausführungsform zusätzlich einen Identifikationscode, der das Positionsbestimmungsgerät eindeutig bezeichnet, von dem sie an das Computersystem übertragen wurden. Das gleiche gilt auch für das Endsignal. Der Identifikationscode kann beispielsweise den Geokoordinaten als sogenannter Header bei der Übertragung vorangestellt sein.

Die Geokoordinaten können für unterschiedliche Positionen in einem beliebigen Zeittakt bestimmt werden. In einer Ausführungsform stellen die Messzeiten für die Geokoordinaten eine periodische Folge von Messzeiten dar. Durch eine periodische Bestimmung von Geokoordinaten wird sichergestellt, dass die entsprechenden Positionen nahe genug beieinander sind, um eine realistische Abbildung der Wegstrecke zu erreichen. Beispielsweise werden die Geokoordinaten alle 10s, bevorzugt alle 5 s, mehr bevorzugt alle 1s für die jeweiligen Positionen bestimmt.

In einer Ausführungsform umfasst das Positionsbestimmungsgerät ein Triggermittel, das zur Auslösung der Bestimmung der Geokoordinaten an der Position vorgesehen ist, an der das Triggermittel betätigt wird. Die Betätigung des Triggermittels löst ein Triggersignal für das Positionsbestimmungsgerät aus, was die Bestimmung der Geokoordinaten an diesem Punkt zur Folge hat. Das Triggermittel könnte beispielsweise eine Tastatur, ein Bestätigungsknopf oder das Setzen eines Häkchens in einem Eingabebildschirm im Positionsbestimmungsgerät sein. In einer Ausführungsform sind die Geokoordinaten in der Folge der Geokoordinaten, die durch das Betätigen des Triggermittels bestimmt wurde, besonders gekennzeichnet. Die besondere Kennzeichnung kann beispielsweise in der Hinzufügung eines Triggercodes als Zusatz zu den Geokoordinatendaten erfolgen. Der Fachmann kann diese Geokoordinaten im Rahmen der vorliegenden Erfindung auch auf andere Weise kennzeichnen. Das Bestätigen des Triggermittels kann beispielsweise an besonderen Wegpunkten erfolgen, beispielsweise beim Passieren von Kreuzungen, beim Wechsel von einer Straßenart zu einer anderen Straßenart oder beim wegebedingten Wechsel von einem Fahrzeug auf ein anderes Fortbewegungsmittel. Somit sind diese speziellen Positionen (Punkte) aus der regelmäßig bestimmten Menge an Geokoordinaten hervorgehoben, da sie für eine Wegeinformation besondere Positionen (Punkte) darstellen. In einer weiteren Ausführungsform hebt das Computersystem die besonders gekennzeichneten Geokoordinaten in der elektronischen Karte als besondere hervor. Damit werden die besonderen Positionen (Punkte) für einen Nutzer der elektronischen Karte sichtbar und die damit verbundene Information kann zu einer besseren Routenwahl oder Routengestaltung durch den Nutzer führen.

In einer Ausführungsform umfasst die elektronische Karte der Version n z x mindestens n+x-1 in sie eingetragene Folgen an Geokoordinaten. Je mehr Folgen an Geokoordinaten in die elektronische Karte eingetragen sind, desto besser ist die damit verbundene Wegeinformation und desto effektiver kann eine Route entlang der bekannten Wegstrecken geplant werden.

Das System umfasst mindestens ein Navigationsgerät, wobei das Computersystem dazu ausgestaltet ist, nach der Speicherung die neueste Version der elektronischen Karte an das Navigationssystem zu übermitteln, und wobei das Navigationssystem dazu ausgestaltet ist, die übermittelte elektronische Karte einer Routenberechnung zu Grunde zu legen und/oder in einem Anzeigeelement des Navigationssystems anzuzeigen. Über die Anzeige der neuesten Version der elektronischen Karte wird das Erreichen eines Ortes erleichtert. Hierbei kann das Positionsbestimmungsgerät eine Komponente des Navigationsgeräts sein. Aus dem Satellitensignal, das das Navigationssystem zum Navigieren empfängt, kann das Positionsbestimmungsgerät die Geokoordinaten zu einer Folge von Geokoordinaten zusammenstellen. In einer Ausführungsform kann das Navigationsgerät ein Smartphone mit Navigationsapplikation sein.

Die Erfindung betrifft des Weiteren ein Verfahren zum Betrieben eines erfindungsgemäßen Systems, umfassend die Schritte
- Bestimmen der Geokoordinaten mehrerer Positionen entlang eines oder mehrerer Wege und deren jeweiliger Messzeiten mittels mindestens eines dort entlang bewegten Positionsbestimmungsgeräts,
- Messen der Geokoordinaten durch Betätigen eines Triggermittels am Positionsbestimmungsgerät an den Punkten der Betätigung,
- Kennzeichnen der Geokoordinaten in der Folge der Geokoordinaten, die in Folge des Betätigens des Triggermittels bestimmt wurden,
- Übertragen einer gemäß der Messzeiten gebildeten chronologischen Folge der Geokoordinaten an ein Computersystem mit Datenspeicher zur Speicherung der chronologischen Folge, wobei das Positionsbestimmungsgerät ein Übertragungsmittel umfasst, das die Folge der Geokoordinaten inklusive der durch Betätigung des Triggermittels erhaltenen Geokoordinaten unverzüglich nach der Messung über ein Mobilfunknetz an das Computersystem überträgt,
- Eintragen der von mindestens einem Positionsbestimmungsgerät bestimmten chronologischen Folge der Geokoordinaten in eine elektronische Karte der Version n,
- Verbinden der Geokoordinaten in der Karte entlang ihrer chronologischen Folge zu einer Wegstrecke,
- Speichern der elektronischen Karte zusammen mit der Wegstrecke entlang der Folge der Geokoordinaten als elektronische Karte der Version n+1.
- Übermitteln der neuesten Version der gespeicherten elektronischen Karte an das Navigationssystem durch das Computersystem, wobei das Navigationssystem die übermittelte elektronische Karte einer Routenberechnung zu Grunde legt und/oder in einem Anzeigeelement des Navigationssystems anzeigt.

In einer Ausführungsform des Verfahrens umfasst dieses des Weiteren den Schritt des Hervorhebens der besonders gekennzeichneten Geokoordinaten in der elektronischen Karte durch das Computersystem.

Das Computersystem übermittelt nach der Speicherung die neueste Version der elektronischen Karte an das Navigationssystem, damit das Navigationssystem die übermittelte elektronische Karte einer Routenberechnung zu Grunde legt und/oder in einem Anzeigeelement des Navigationssystems anzeigt. Das Navigationssystem umfasst dazu geeignete Mittel zum Empfang der Daten der elektronischen Karte, beispielsweise über ein Datenkabel oder eine kabellose Datenverbindung (z. B. eine Mobilfunkverbindung, eine WLAN-Verbindung oder andere geeignete kabellose Verbindungen).

### Kurze Beschreibung der Abbildungen

Diese und andere Aspekte der Erfindung werden im Detail in den Abbildungen wie folgt gezeigt.
- Fig. 1:: ein Anwendungsbeispiel für das erfindungsgemäße System.
- Fig.2:: ein Beispiel einer chronologischen Folge an Geokoordinaten.
- Fig.3:: eine schematische Darstellung einer Ausführungsform des erfindungsgemäßen Systems.
- Fig.4: ein Beispiel für eine elektronische Karte, in die Wegstrecken gemäß des erfindungsgemäßen Systems und Verfahrens eingetragen sind.

### Detaillierte Beschreibung der Ausführungsbeispiele

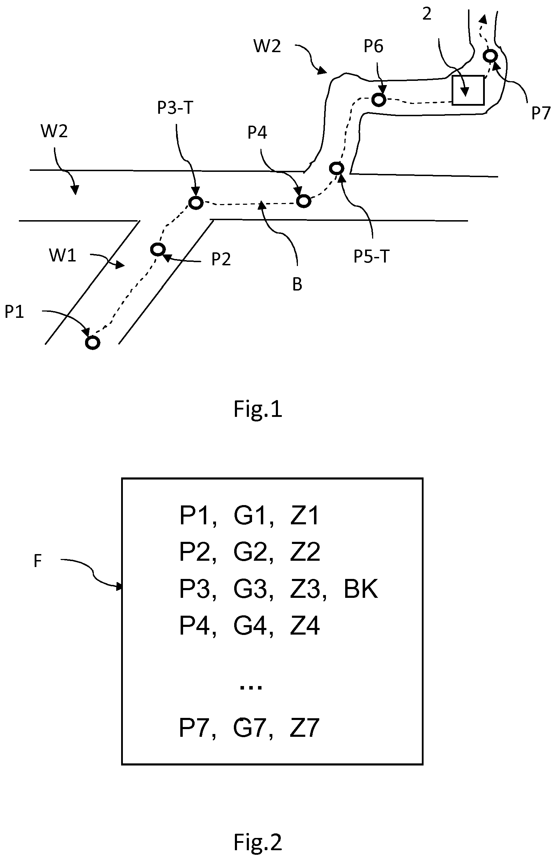

Figur 1 zeigt schematisch mehrere Wege W1, W2, W3, über die entlang des gestrichelten Pfeils das Positionsbestimmungsgerät 2 des Systems 1 entlang des beschrittenen Weges B bewegt wurde. Das Positionsbestimmungsgerät 2 ist hier ein portables Gerät, um auch die Geokoordinaten entlang von Fußwegen bestimmen zu können. Die Wege W1 und W2 stellen hier Fahrstraßen dar, während W3 ein Feldweg ist. Entlang des beschrittenen Weges B wurden an Positionen P1 - P7 zu den Messzeiten Z1 - Z7 die dazugehörigen Geokoordinaten G1 - G7 bestimmt. Dabei wurden die Messungen an den Positionen P3-T und P5-T durch Betätigen des Triggermittels 22 (beispielsweise durch Drücken eines Triggerknopfes) des Positionsbestimmungsgeräts 2 ausgelöst. Die Position P3-T stellt als Kreuzungspunkt eine besondere Position dar, dessen hervorgehobene Darstellung in der elektronischen Karte von Vorteil ist. Ebenso ist die Position P5-T eine besondere Position, da hier sowohl eine Kreuzung vorliegt, als auch die Beschaffenheit des Weges sich ändert (Fahrtstraße - Feldweg). Die Geokoordinaten G1 - G7 können anhand der Messzeiten Z1 - Z7 in einer chronologischen Folge F an Geokoordinaten G1 - G7 dargestellt werden, die an das Computersystem 3 übertragen wird.

Figur 2 zeigt die Folge F der Geokoordinaten G1 - G7, die für die Positionen P1 - P7 chronologisch nach den Messzeiten Z1 - Z7 geordnet ist. Die Geokoordinaten G3 zur Position P3 wurden, wie schon in Figur 1 beschrieben, an einem besonderen Punkt (Kreuzungspunkt der Wege W1 und W2) bestimmt und sind daher für eine spätere hervorgehobene Darstellung in der elektronischen Karte in der Folge F besonders mit "BK" gekennzeichnet. Die Angaben in der Folge F können zu jeder Position P1 - P7 als Datenstring mit Geokoordinaten, Positionsbezeichnung, Messzeit und gegebenenfalls einem Kennzeichnungscode BK vorliegen.

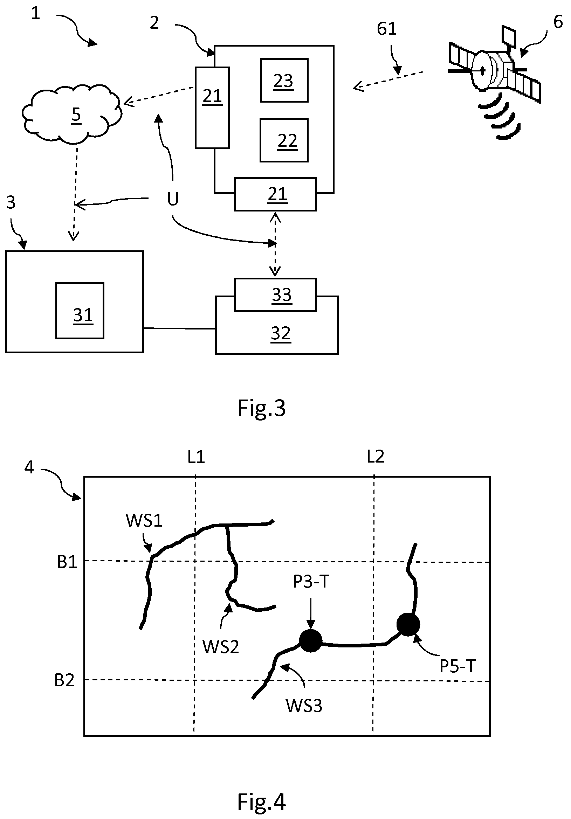

Figur 3 zeigt eine schematische Darstellung einer Ausführungsform des erfindungsgemäßen Systems 1, das mindestens ein Positionsbestimmungsgerät 2 umfasst, das während einer Bewegung B des Positionsbestimmungsgeräts 2 für mehrere Positionen P1 - P7 entlang der Wege W1 - W3 die Geokoordinaten G1 - G7 zu den jeweiligen Positionen P1 - P7 und deren jeweilige Messzeiten Z1 - Z7 bestimmt. Diese Reihe an Daten wird als eine chronologische Folge F der Geokoordinaten G1 - G7 an ein Computersystem 3 mit Datenspeicher 31 zur Speicherung übertragen U. Die Übertragung U wird über ein Übertragungsmittel 21 des Positionsbestimmungsgerätes 2 durchgeführt. In Figur 3 sind zwei verschiedene Ausführungsformen des Übertragungsmittels 21 gezeigt. Zum einen ist das Übertragungsmittel 21 eine Datenschnittstelle, die mit einer entsprechenden Schnittstelle 33 einer mit dem Computersystem 3 verbundenen Auslesestation 32 verbunden ist. Beispielsweise wird das Positionsbestimmungsgerät 2 mit der Schnittstelle 21 in die Auslesestation 32 gestellt, so dass eine Datenverbindung zwischen dem Positionsbestimmungsgerät 2 und der Auslesestation 32 hergestellt ist, über die die Folge F der Geokoordinaten an das Computersystem 3 übertragen U wird. Alternativ ist das Übertragungsmittel 21 ein Mobilfunkgerät, so dass die Folge F von Geokoordinaten über ein Mobilfunknetz 5 an das Computersystem 3 übertragen wird. Das Computersystem 3 ist dabei geeignet ausgestaltet, die Folge F der Geokoordinaten über das Mobilfunknetz 5 zu empfangen. Das Positionsbestimmungsgerät 2 umfasst des Weiteren ein Triggermittels 22, das zur Auslösung der Bestimmung der Geokoordinaten an der Position P3-T, P5-T vorgesehen ist, an der das Triggermittel 22 betätigt wird. Das System 1 umfasst des Weiteren ein Navigationsgerät 23, an das das Computersystem 3 nach der Speicherung die neueste Version der elektronischen Karte 4 (siehe Figur 4) übermittelt. Das Navigationssystem 23 ist dabei dazu ausgestaltet, die übermittelte elektronische Karte 4 einer Routenberechnung zu Grunde zu legen und/oder in einem Anzeigeelement des Navigationssystems 23 anzuzeigen. Hier ist das Navigationsgerät im Positionsbestimmungsgerät 2 angeordnet, damit ein Nutzer des Systems 1 nur ein portables Gerät mit sich führen muss, was die Handhabung vereinfacht. Die Geokoordinaten werden dabei aus dem Satellitensignal 61 eines Satellitennavigationssystems 6 bestimmt. Es ist insbesondere von Vorteil, wenn das Positionsbestimmungsgerät 2 das Satellitensignal 61 über das Navigationsgerät 23 gleichsam zum Navigieren entlang einer Wegstrecke W3 verwenden kann.

Fig.4 zeigt ein Beispiel für eine elektronische Karte 4, in die als Beispiel drei Wegstrecken WS1, WS2, WS3 nach dem erfindungsgemäßen System 1 und dem erfindungsgemäßen Verfahren eingetragen sind. Die elektronische Karte 4 zeigt als gestrichelte Linien zur Orientierung Längen- und Breitengarde L1, L2, B1, B2 an. Das Computersystem 3 ist für eine Ergänzung der elektronischen Karte 4 dazu ausgestaltet, die vom dem mindestens einen Positionsbestimmungsgerät 2 bestimmte chronologische Folge F der Geokoordinaten in die elektronische Karte 4 der Version n einzutragen, die bereits Wegstrecken WS1 und WS2 von früheren übertragenen Folgen F an Geokoordinaten beinhaltet. In die Karte 4 dieser Version n werden die Geokoordinaten G1 - G7 entlang ihrer chronologischen Folge F eingetragen und zu einer Wegstrecke WS3 mittels der gezeigten Line verbunden. Die in der Folge F mit BK besonders gekennzeichneten Geokoordinaten zu den Positionen P3-T und P5-T sind in der elektronischen Karte 4 als schwarze Kreise besonders hervorgehoben. Die nun um die Wegstrecke WS3 ergänzte elektronische Karte 4 wird vom Computersystem 3 als Version n+1 abgespeichert und den Nutzern für eine Routenplanung zur Verfügung gestellt.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### LISTE DER BEZUGSZEICHEN

- 1: erfindungsgemäßes System
- 2: Positionsbestimmungsgerät
- 21: Übertragungsmittel
- 22: Triggermittel
- 23: Navigationsgerät
- 3: Computersystem
- 31: Datenbank
- 32: Auslesestation
- 4: elektronische Karte
- 5: Mobilfunknetz
- 6: Satellitennavigationssystem
- 61: Satellitensignal

- G1,...,G7: Geokoordinaten
- P1,..., P7: Positionen, an denen die Geokoordinaten bestimmt wurden
- P3-T, P5-T: Positionen bei Betätigung des Triggermittels
- Z1,... ,Z7: Messzeiten der Geokoordinaten an den jeweiligen Positionen
- B1, B2: Breitengrade auf der elektronischen Karte
- BK: besondere Kennzeichnung für Geokoordinaten
- F: chronologischen Folge an Geokoordinaten
- L1, L2: Längengrade auf der elektronischen Karte
- U: Übertragen der Folge an Geokoordinaten an das Computersystem
- W1 - W3: Wege
- WS1 - WS3: Wegstrecken

## Patentansprüche

1. Ein System (1) zur Erstellung von Kartenmaterial oder eines Wegeverzeichnisses umfassend mindestens ein Positionsbestimmungsgerät (2), ein Computersystem und ein Navigationssystem, das dazu vorgesehen ist, während einer Bewegung (B) des Positionsbestimmungsgeräts (2) für mehrere Positionen (P1, ... , P7) entlang eines oder mehrerer Wege (W1, W2, W3) zumindest die Geokoordinaten (G1, ... , G7) der jeweiligen Position (P1, ... , P7) und deren jeweilige Messzeiten (Z1, ... , Z7) zu bestimmen und als eine chronologische Folge (F) der Geokoordinaten (G1, ... , G7) gemäß der dazugehörigen Messzeiten (Z1, ... , Z7) an ein Computersystem (3) mit Datenspeicher (31) zur Speicherung zu übertragen (U), wobei das Computersystem (3) dazu ausgestaltet ist, die von mindestens einem der Positionsbestimmungsgeräte (2) bestimmte chronologische Folge (F) der Geokoordinaten (G1, ... , G7) in eine elektronische Karte (4) der Version n einzutragen und in der Karte (4) die Geokoordinaten (G1, ... , G7) entlang ihrer chronologischen Folge (F) zu einer Wegstrecke (WS1, WS2, WS3) zu verbinden und die elektronische Karte (4) zusammen mit der Wegstrecke (WS1, WS2, WS3) entlang der Folge (F) der Geokoordinaten (G1, ... , G7) als elektronische Karte (4) der Version n+1 zu speichern
dadurch gekennzeichent,
dass das Positionsbestimmungsgerät (2) ein Triggermittel (22) umfasst, dessen Betätigung die Messung der Geokoordinaten an den Punkten (P3-T, P5-T) der Betätigung auslöst, wobei die Geokoordinaten (G3, G5) in der Folge der Geokoordinaten (G1, ... , G7), die durch das Betätigen des Triggermittels (22) gemessen wurden, besonders gekennzeichnet (BK) sind und dass das Positionsbestimmungsgerät (2) ein Übertragungsmittel (21) umfasst, das die Folge (F) der Geokoordinaten (G1, ... , G7) inklusive der durch Betätigung des Triggermittels erhaltenen Geokoordinaten unverzüglich nach der Messung über ein Mobilfunknetz (5) an das Computersystem (3) überträgt, wobei dass das Computersystem (3) dazu ausgestaltet ist, nach der Speicherung die neueste Version der elektronischen Karte (4) an das Navigationssystem (23) zu übermitteln, und wobei das Navigationssystem (23) dazu ausgestaltet ist, die übermittelte elektronische Karte (4) einer Routenberechnung zu Grunde zu legen und/oder in einem Anzeigeelement des Navigationssystems (23) anzuzeigen.

2. Das System (1) nach Anspruch 1, **dadurch gekennzeichnet, dass** das Positionsbestimmungsgerät (2) ein portables Gerät ist.

3. Das System (1) nach Anspruch 1 oder 2, **dadurch gekennzeichnet, dass** das Übertragungsmittel (21) eine Datenschnittstelle ist und dass das System (1) eine mit dem Computersystem (3) verbundene Auslesestation (32) zum Auslesen der Folge (F) der Geokoordinaten (G1, ... , G7) aus dem Positionsbestimmungsgerät (2) über die Datenschnittstelle (21) umfasst.

4. Das System (1) nach einem der voranstehenden Ansprüchen, **dadurch gekennzeichnet, dass** die Messzeiten (Z1, ... , Z7) für die Geokoordinaten (G1, ... , G7) eine periodisch Folge von Messzeiten (Z1, ... , Z7) darstellen.

5. Das System (1) nach einem der voranstehenden Ansprüche, **dadurch gekennzeichnet, dass** das Computersystem (3) die besonders gekennzeichneten Geokoordinaten (G3, G5) in der elektronischen Karte (4) als besonders hervorhebt.

6. Das System (1) nach einem der voranstehenden Ansprüchen, **dadurch gekennzeichnet, dass** die elektronische Karte (4) der Version n + x mindestens n+x-1 in sie eingetragene Folgen (F) an Geokoordinaten umfasst.

7. Ein Verfahren zum Betreiben eines Systems (1) nach Anspruch 1, umfassend die Schritte
- Bestimmen der Geokoordinaten (G1, ... , G7) mehrerer Positionen (P1, ... , P7) entlang eines oder mehrerer Wege (W1, W2, W3) und deren jeweiliger Messzeiten (Z1, ... , Z7) mittels mindestens eines dort entlang bewegten Positionsbestimmungsgeräts (2),
- Messen der Geokoordinaten (G3, G4) durch Betätigen eines Triggermittels (22) am Positionsbestimmungsgerät (2) an den Punkten (P3-T, P5-T) der Betätigung,
- Kennzeichnen (BK) der Geokoordinaten (G3, G5) in der Folge (F) der Geokoordinaten (G1, ... , G7), die in Folge des Betätigens des Triggermittels (22) bestimmt wurden,
- Übertragen (U) einer gemäß der Messzeiten (Z1, ... , Z7) gebildeten chronologischen Folge (F) der Geokoordinaten (G1, ... , G7) an ein Computersystem (3) mit Datenspeicher (31) zur Speicherung der chronologischen Folge (F), wobei das Positionsbestimmungsgerät (2) ein Übertragungsmittel (21) umfasst, das die Folge (F) der Geokoordinaten (G1, ... , G7) inklusive der durch Betätigung des Triggermittels (22) erhaltenen Geokoordinaten (G3, G4) unverzüglich nach der Messung über ein Mobilfunknetz (5) an das Computersystem (3) überträgt,
- Eintragen der von mindestens einem Positionsbestimmungsgerät (2) bestimmten chronologischen Folge (F) der Geokoordinaten (G1, ... , G3) in eine elektronische Karte (4) der Version n,
- Verbinden der Geokoordinaten (G1, ... , G7) in der Karte entlang ihrer chronologischen Folge (F) zu einer Wegstrecke (W1, W2, W3),
- Speichern der elektronischen Karte (4) zusammen mit der Wegstrecke (W1, W2, W3) entlang der Folge (F) der Geokoordinaten (G1, ... , G7) als elektronische Karte (4) der Version n+1.
- Übermitteln der neuesten Version der gespeicherten elektronischen Karte (4) an das Navigationssystem (23) durch das Computersystem (3), wobei das Navigationssystem (23) die übermittelte elektronische Karte (4) einer Routenberechnung zu Grunde legt und/oder in einem Anzeigeelement des Navigationssystems (23) anzeigt.

8. Das Verfahren nach Anspruch 7, **dadurch gekennzeichnet, dass** das Verfahren des Weiteren den Schritt des Hervorhebens der besonders gekennzeichneten Geokoordinaten (G3, G5) in der elektronischen Karte (4) durch das Computersystem (2) umfasst.

## Claims

1. A system (1) for producing map material or a street directory comprising at least one positioning device (2), a computer system and a navigation system, said system (1) being configured in such a way that, for several positions (P1 ... P7) along one or more routes (W1, W2, W3), during a movement (B) of the positioning device (2), it determines at least the geo-coordinates (G1 ... G7) of the appertaining position (P1 ... P7) and their appertaining measuring times (Z1 ... Z7), and it transmits (U) them as a chronological sequence (F) of the geo-coordinates (G1 ... G7) on the basis of the associated measuring times (Z1 ... Z7) to a computer system (3) equipped with a data storage unit (31) for storage purposes, whereby the computer system (3) is configured to enter the chronological sequence (F) of the geo-coordinates (G1 ... G7) determined by at least one of the positioning devices (2) into an electronic map (4) of version n, and to connect the geo-coordinates (G1 ... G7) to a route (W1, W2, W3) according to their chronological sequence (F) in the map (4), and also configured to store the electronic map (4) together with the route (WS1, WS2, WS3) according to the sequence (F) of the geo-coordinates (G1 ... G7) as an electronic map (4) of version n+1,
**characterized in that**
the positioning device (2) comprises a triggering means (22) whose actuation triggers the measurement of the geo-coordinates at the actuation points (P3-T, P5-T), whereby the geo-coordinates (G3, G5) in the sequence of the geo-coordinates (G1 ... G7), which were measured in response to the actuation of the triggering means (22), are specially marked (BK), and **in that** the positioning device (2) comprises a transmission means (21) that transmits the sequence (F) of the geo-coordinates (G1 ... G7), including the geo-coordinates (G3, G4) obtained through the actuation of the triggering means (22), to the computer system (3) via a mobile telecommunications network (5) immediately after the measurement, whereby the computer system (3) is configured in such a way that, after the storage, the latest version of the electronic map (4) is transmitted to the navigation system (23), and whereby the navigation system (23) is configured to utilize the transmitted electronic map (4) of a route calculation as the basis and/or to display it in a display element of the navigation system (23).

2. The system (1) according to claim 1, **characterized in that** the positioning device (2) is a portable device.

3. The system (1) according to claim 1 or 2, **characterized in that** the transmission means (21) is a data interface, and **in that** the system (1) comprises a read-out station (32) connected to the computer system (3) in order to read the sequence (F) of the geo-coordinates (G1 ... G7) out of the positioning device (2) via the data interface (21).

4. The system (1) according to one of the preceding claims, **characterized in that** the measuring times (Z1 ... Z7) for the geo-coordinates (G1 ... G7) represent a periodic sequence of measuring times (Z1 ... Z7).

5. The system (1) according to one of the preceding claims, **characterized in that** the computer system (3) highlights the specially marked geo-coordinates (G3, G5) in the electronic map (4) as being special.

6. The system (1) according to one of the preceding claims, **characterized in that** the electronic map (4) of version n+x comprises at least n+x-1 sequences (F) of geo-coordinates entered therein.

7. A method for operating a system (1) according to claim 1, comprising the following steps:
• determining the geo-coordinates (G1 ... G7) of several positions (P1 ... P7) along one or more routes (W1, W2, W3) as well as their appertaining measuring times (Z1 ... Z7) by means of at least one positioning device (2) that is moved along there,
• measuring the geo-coordinates (G3, G4) by actuating the triggering means (22) on the positioning device (2) at the actuation points (P3-T, P5-T),
• marking (BK) the geo-coordinates (G3, G5) in the sequence of the geo-coordinates (G1 ... G7), which were measured in response to the actuation of the triggering means (22),
• transmitting (U) a chronological sequence (F) of the geo-coordinates (G1 ... G7) formed on the basis of the measuring times (Z1 ... Z7) to a computer system (3) equipped with a data storage unit (31) in order to store the chronological sequence (F), whereby the positioning device (2) comprises a transmission means (21) that transmits the sequence (F) of the geo-coordinates (G1 ... G7), including the geo-coordinates obtained through the actuation of the triggering means, to the computer system (3) via a mobile telecommunications network (5) immediately after the measurement,
• entering the chronological sequence (F) of the geo-coordinates (G1 ... G3) determined by at least one positioning device (2) into an electronic map (4) of version n,
• connecting the geo-coordinates (G1 ... G7) in the map according to their chronological sequence (F) to a route (W1, W2, W3),
• storing the electronic map (4) together with the route (W1, W2, W3) according to the sequence (F) of the geo-coordinates (G1 ... G7) as an electronic map (4) of version n+1,
• transmitting the latest version of the stored electronic map (4) to the navigation system (23) by means of the computer system (3), whereby the navigation system (23) uses the transmitted electronic map (4) of a route calculation as the basis and/or displays it in a display element of the navigation system (23).

8. The method according to claim 7, **characterized in that** the method comprises the additional step of highlighting the specially marked geo-coordinates (G3, G5) in the electronic map (4) by means of the computer system (3).

## Revendications

1. Système (1) pour créer du matériel cartographique ou un répertoire de chemins, comprenant au moins un appareil de détermination de position (2), un système informatique et un système de navigation prévu pour déterminer au moins les géocoordonnées (G1, ...., G7) de la position respective (P1, ..., P7) et leurs temps de mesure respectifs (Z1, ..., Z7) pendant un mouvement (B) de l'appareil de détermination de position (2) pour plusieurs positions (P1, ..., P7) le long d'un ou de plusieurs chemins (W1, W2, W3) et les transmettre (U), en tant que suite chronologique (F) des géocoordonnées (G1, ..., G7), selon les temps de mesure associés (Z1, ..., Z7) à un système informatique (3) avec mémoire de données (31) pour le stockage, le système informatique (3) étant conçu pour enregistrer sur une carte électronique (4) de la version n la suite chronologique (F) des géocoordonnées (G1, ..., G7) déterminée par au moins l'un des appareils de détermination de position (2) et relier les géocoordonnées (G1, ..., G7) sur la carte (4) en suivant leur suite chronologique (F) pour obtenir un trajet (WS1, WS2, WS3) et sauvegarder la carte électronique (4) avec le trajet (WS1, WS2, WS3) en suivant la suite (F) des géocoordonnées (G1, ..., G7) en tant que carte électronique (4) de la version n+1,
**caractérisé en ce que**
l'appareil de détermination de position (2) comprend un moyen de déclenchement (22) dont l'actionnement déclenche la mesure des géocoordonnées aux points (P3-T, P5-T) de l'actionnement, les géocoordonnées (G3, G5) étant repérées (BK) de manière particulière dans la suite des géocoordonnées (G1, ..., G7) qui ont été mesurées par l'actionnement du moyen de déclenchement (22), et **en ce que** l'appareil de détermination de position (2) comprend un moyen de transmission (21) qui transmet au système informatique (3), via un réseau radio mobile (5), dès après la mesure, la suite (F) des géocoordonnées (G1, ..., G7), y compris les géocoordonnées obtenues par actionnement du moyen de déclenchement, le système informatique (3) étant conçu pour transmettre la version la plus récente de la carte électronique (4) au système de navigation (23) après la sauvegarde, et le système de navigation (23) étant conçu pour prendre la carte électronique transmise (4) comme base d'un calcul d'itinéraire et/ou pour l'afficher dans un élément d'affichage du système de navigation (23).

2. Système (1) selon la revendication 1, **caractérisé en ce que** l'appareil de détermination de position (2) est un appareil portable.

3. Système (1) selon la revendication 1 ou 2, **caractérisé en ce que** le moyen de transmission (21) est une interface de données et **en ce que** le système (1) comprend une station de lecture (32) reliée au système informatique (3) pour extraire la suite (F) des géocoordonnées (G1, ..., G7) de l'appareil de détermination de position (2) via l'interface de données (21).

4. Système (1) selon l'une des revendications précédentes, **caractérisé en ce que** les temps de mesure (Z1, ..., Z7) des géocoordonnées (G1, ..., G7) constituent une suite périodique de temps de mesure (Z1, ..., Z7).

5. Système (1) selon l'une des revendications précédentes, **caractérisé en ce que** le système informatique (3) met en évidence comme particulières, sur la carte électronique (4), les géocoordonnées (G3, G5) repérées comme particulières.

6. Système (1) selon l'une des revendications précédentes, **caractérisé en ce que** la carte électronique (4) de la version n+x comprend au moins n+x-1 suites (F) de géocoordonnées enregistrées dessus.

7. Procédé d'exploitation d'un système (1) selon la revendication 1, comprenant les étapes suivantes :
- déterminer les géocoordonnées (G1, ..., G7) de plusieurs positions (P1, ..., P7) le long d'un ou de plusieurs chemins (W1, W2, W3) et de leurs temps de mesure respectifs (Z1, ..., Z7) au moyen d'au moins un appareil de détermination de position (2) qui se déplace en les suivant ;
- mesurer les géocoordonnées (G3, G4) par actionnement d'un moyen de déclenchement (22) sur l'appareil de détermination de position (2) aux points (P3-T, P5-T) de l'actionnement,
- repérer (BK) les géocoordonnées (G3, G5) dans la suite (F) des géocoordonnées (G1, ..., G7) qui ont été déterminées suite à l'actionnement du moyen de déclenchement (22) ;
- transmettre (U) une suite chronologique (F) des géocoordonnées (G1, ..., G7) formée selon les temps de mesure (Z1, ..., Z7) à un système informatique (3) avec mémoire de données (31) pour le stockage de la suite chronologique (F), l'appareil de détermination de position (2) comprenant un moyen de transmission (21) qui transmet au système informatique (3), via un réseau radio mobile (5), dès après la mesure, la suite (F) des géocoordonnées (G1, ..., G7), y compris les géocoordonnées obtenues par actionnement du moyen de déclenchement (22) ;
- enregistrer la suite chronologique (F) des géocoordonnées (G1, ..., G3) déterminée par l'au moins un appareil de détermination de position (2) sur une carte électronique (4) de la version n,
- relier les géocoordonnées (G1, ..., G7) sur la carte en suivant leur suite chronologique (F) pour obtenir un trajet (W1, W2, W3) ;
- sauvegarder la carte électronique (4) avec le trajet (WS1, WS2, WS3) en suivant la suite (F) des géocoordonnées (G1, ..., G7) en tant que carte électronique (4) de la version n+1 ;
- transmettre, au moyen du système informatique, la version la plus récente de la carte électronique sauvegardée (4) au système de navigation (23), le système de navigation (23) prenant la carte électronique transmise (4) comme base d'un calcul d'itinéraire et/ou l'affichant dans un élément d'affichage du système de navigation (23).

8. Procédé selon la revendication 7, **caractérisé en ce que** le procédé comprend en outre l'étape de mise en évidence, sur la carte électronique (4), par le système informatique (2), des géocoordonnées (G3, G5) repérées de manière particulière.
